# FASCICULE DE BREVET EUROPEEN

(11) **EP 2 946 033 B1**
(45) Date de publication et mention de la délivrance du brevet: **09.11.2016**
(21) Numéro de dépôt: 14703118.1
(22) Date de dépôt: 09.01.2014
(51) Int. Cl.: B60B 11/06, D03D 25/00, B29B 11/16, D03D 3/02

(54) **STRUCTURE FIBREUSE POUR PIÈCE AXISYMÉTRIQUE EN MATÉRIAU COMPOSITE A DIAMÈTRE ÉVOLUTIF ET PIÈCE LA COMPORTANT**
FASERSTRUKTUR FÜR EINE AUS EINEM VERBUNDWERKSTOFF HERGESTELLTE ACHSENSYMMETRISCHE KOMPONENTE MIT SICH PROGRESSIV ÄNDERNDEM DURCHMESSER UND BAUTEIL DAMIT
FIBRE STRUCTURE FOR AN AXISYMMETRIC COMPONENT MADE OF COMPOSITE MATERIAL WITH PROGRESSIVELY CHANGING DIAMETER, AND COMPONENT COMPRISING SAME

(30) Priorité: 17.01.2013 FR 1350409
(43) Date de publication de la demande: 25.11.2015
(73) Titulaire: SAFRAN, 75015 Paris (FR); Aircelle, 76700 Gonfeville-l'Orcher (FR)
(72) Inventeur: DUNLEAVY, Patrick, F-91120 Palaiseau (FR); DESJOYEAUX, Bertrand, F-76310 Sainte Adresse (FR)
(74) Mandataire: Boura, Olivier
(86) Numéro de dépôt international: PCT/FR2014/050028
(87) Numéro de publication internationale: WO 2014/111643

(56) Documents cités:
- WO-A1-2006/055320
- JP-A- H01 168 933
- JP-A- H01 168 934
- JP-A- H07 216 684

## Description

### Arrière-plan de l'invention

La présente invention concerne la réalisation de pièces axisymétriques à diamètre évolutif en matériau composite, et plus particulièrement de structures fibreuses pour de telles pièces.

Un exemple d'application de l'invention est la réalisation de roues (ou jantes) d'aéronef. Un autre exemple d'application est la réalisation de carters de compresseur pour moteur d'hélicoptère à turbine à gaz.

De façon connue, une roue d'aéronef est réalisée en deux parties fixées l'une à l'autre de sorte à permettre le montage et démontage du pneumatique sur la roue. Chacune des demi-roues se présente sous la forme d'un anneau ouvert à section en forme de C. La roue reçoit également un système de freinage formé notamment d'un disque de frein en matériau composite logé à l'intérieur de l'une des demi-roues.

De telles roues d'aéronef sont typiquement réalisées en aluminium, chaque demi-roue étant par exemple obtenue par forgeage. Cependant, la réalisation des roues en métal alourdit ces dernières et requiert une maintenance importante en grande partie due à la corrosion galvanique entre les roues métalliques et les disques de frein en matériau composite.

Pour pallier un tel inconvénient, il a été proposé de réaliser les demi-roues constitutives d'une roue d'aéronef en matériau composite ayant un renfort fibreux densifié par une matrice. Plus précisément, le renfort fibreux d'une demi-roue roue est formé par une structure fibreuse pouvant être tissée ou tressée en une seule pièce par « contour weaving » sur un mandrin de formage ayant une partie de forme tronconique. Différentes transformations géométriques sont ensuite appliquées à cette structure fibreuse pour l'amener à une forme d'anneau ouvert à section en forme de C correspondant à une préforme fibreuse de demi-roue d'aéronef. La préforme fibreuse ainsi obtenue est ensuite densifiée par une matrice pour former une demi-roue d'aéronef, par exemple par moulage avec transfert de résine (procédé RTM pour « Resin Transfer Moulding »). On pourra ainsi se référer à la demande de brevet français n°1258720 déposée le 18 septembre 2012 qui décrit des exemples de mise en oeuvre d'un tel procédé de fabrication.

La réalisation d'une préforme fibreuse de demi-roue d'aéronef au moyen d'un tel procédé s'applique parfaitement lorsque le rapport entre grand diamètre et petit diamètre de la partie tronconique de la structure fibreuse tissée ou tressée sur le mandrin de formage est proche de 1. En effet, avec un tel rapport, il est possible d'obtenir un taux de fibres de l'ordre de 55% à 60% qui soit homogène sur toute la préforme, ce qui permet de conférer à celle-ci une tenue structurale satisfaisante pour l'application envisagée.

En revanche, lorsque le rapport entre grand diamètre et petit diamètre de la partie tronconique de la structure fibreuse est au moins égal à 2, il devient difficile, à partir du procédé de la demande de brevet français n°1258720, d'obtenir un taux de fibres aussi élevé qui soit homogène sur toute la préforme. En effet, l'augmentation du rapport entre diamètres de la structure fibreuse a pour conséquence d'augmenter au niveau du grand diamètre de celle-ci l'espacement entre fils de trame adjacents. Il en résulte un taux de fibres qui n'est pas homogène sur toute la préforme.

Une structure fibreuse tissée selon le préambule de la revendication 1 est connue du WO 2006/055320 A1

. Pour remédier à ce problème, il est possible d'apporter des fibres de trame supplémentaires dans la zone de grand diamètre et de les interrompre en allant vers la zone de petit diamètre. Toutefois, cette solution n'est pas satisfaisante pour la tenue de la pièce réalisée.

### Objet et résumé de l'invention

La présente invention vise à proposer une structure fibreuse tissée en une seule pièce pour la fabrication d'une pièce axisymétrique en matériau composite à diamètre évolutif qui ne présente les inconvénients précités.

Ce but est atteint grâce à une structure fibreuse ayant une partie de forme tronconique avec un grand diamètre et un petit diamètre, le rapport entre grand diamètre et petit diamètre étant égal au moins à 2, la structure fibreuse étant formée par enroulement de couches de fils de chaîne et de trame qui sont tissées sur un mandrin ayant un profil défini en fonction du profil de la pièce à fabriquer avec appel en fils de chaîne, caractérisé en ce que, pour chaque couche de fils de chaîne et de trame, les fils de trame sont répartis angulairement selon un même diamètre dans une zone du grand diamètre de la partie de forme tronconique de la structure fibreuse et selon au moins deux diamètres différents dans une zone du petit diamètre de la partie de forme tronconique de la structure fibreuse pour former au moins deux strates superposées de fils de trame.

La structure fibreuse selon l'invention présente une distribution particulière des fils de trame dans laquelle, pour chaque couche de fils, les fils de trame sont répartis selon un même diamètre dans une zone du grand diamètre et selon au moins deux strates superposées de fils de trame dans une zone au niveau du petit diamètre. En partant d'un taux de fibres souhaité au niveau du grand diamètre de la structure fibreuse (par exemple de l'ordre de 55% à 60%), il est possible d'un déduire un espacement particulier des fils de trame au niveau de ce grand diamètre. L'excès de fils de trame qui résulte du rétrécissement de la partie tronconique de la structure fibreuse au niveau de son petit diamètre peut alors être déplacé dans l'épaisseur de ce petit diamètre en superposant les fils de trame. Ainsi, il est possible d'obtenir un taux de fibres par couche qui soit homogène sur toute la largeur de la structure fibreuse.

Par ailleurs, dans le cas d'une application à la réalisation d'un renfort fibreux pour la fabrication d'une demi-roue d'aéronef, l'augmentation de l'épaisseur de la structure fibreuse au niveau du petit diamètre qui résulte de la superposition des fils de trame correspond à un besoin de tenue mécanique dans cette partie de la structure fibreuse qui formera, après mise en forme et densification, une partie du moyeu de la roue. En effet, la charge qui s'applique sur l'essieu de la roue requiert une épaisseur de matériau composite plus importante que sur le reste de la roue.

Selon un mode de réalisation du tissage des fils de trame dans la zone du petit diamètre de la structure fibreuse, pour chaque couche de fils, les deux strates de fils de trame répartis dans la zone du petit diamètre de la partie de forme tronconique sont liées entre elles par une seule et même couche de fils de chaîne.

Dans ce mode de réalisation, les fils de chaîne liant entre elles deux strates de fils de trame répartis dans la zone du petit diamètre de la partie de forme tronconique sont tissés selon une armure de type interlock.

Selon un autre mode de réalisation du tissage des fils de trame dans la zone du petit diamètre de la structure fibreuse, pour chaque couche de fils, chacune des strates de fils de trame répartis dans la zone du petit diamètre de la partie de forme tronconique est liée par une seule et même couche de fils de chaîne. Ainsi, les fils de trame en excès au niveau du petit diamètre de la structure fibreuse sont liés pour former au moins deux couches indépendantes l'une de l'autre. Un tel mode de réalisation permet d'appliquer à la structure des déformations géométriques pour notamment lui conférer une forme de demi-roue.

Dans ce mode de réalisation, les fils de chaîne liant chaque strate de fils de trame répartis dans la zone du petit diamètre de la partie de forme tronconique sont tissés selon une armure de type toile, sergé ou satin.

Selon un mode de réalisation du tissage des fils de trame dans la zone du grand diamètre de la structure fibreuse, pour chaque couche de tissu, la couche de fils de trame répartis au niveau du grand diamètre de la partie de forme tronconique est liée par une seule et même couche de fils de chaîne.

Dans ce mode de réalisation, les fils de chaîne liant les fils de trame répartis dans la zone du grand diamètre de la partie de forme tronconique sont tissés selon une armure de type toile, sergé ou satin.

Selon un autre mode de réalisation du tissage des fils de trame dans la zone du grand diamètre de la structure fibreuse, pour chaque couche de fils, les fils de trame répartis dans la zone du grand diamètre de la partie de forme tronconique sont liés entre eux par deux couches indépendantes de fils de chaîne.

Dans ce mode de réalisation, les fils de chaîne liant les fils de trame répartis dans la zone du grand diamètre de la partie de forme tronconique sont tissés selon une armure de type toile, sergé ou satin.

Par ailleurs, pour chaque couche de fils, les fils de trame répartis entre le grand diamètre et le petit diamètre de la partie de forme tronconique de la structure fibreuse sont liés entre eux par une seule ou plusieurs couches de fil de chaîne. Ces couches constituent la transition entre grand et petit diamètres de la partie de forme tronconique de la structure fibreuse.

Les fils de chaîne d'une même couche de fils de chaîne liant des fils de trame entre le grand diamètre et le petit diamètre de la partie de forme tronconique peuvent être tissés selon une armure de type toile ou de type sergé.

L'invention a également pour objet une pièce en matériau composite ayant un renfort fibreux densifié par une matrice, dans laquelle le renfort fibreux est formé par une structure fibreuse telle que définie précédemment. Cette pièce peut constituer une demi-roue d'aéronef.

L'invention a encore pour objet un procédé de tissage en une seule pièce d'une structure fibreuse telle que définie précédemment, comprenant l'enroulement de plusieurs couches de fils de chaîne et de trame sur un mandrin ayant un profil défini en fonction du profil de la pièce à fabriquer avec appel en fils de chaîne.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue en coupe d'une roue d'aéronef ;
- la figure 2 est vue en perspective d'un exemple de structure fibreuse conforme à l'invention pouvant être utilisée pour la fabrication d'une demi-roue d'aéronef ;
- la figure 3 est une vue en perspective de la structure fibreuse de la figure 2 ayant subie des déformations géométriques pour l'amener à une forme de demi-roue d'aéronef ;
- la figure 4 est une vue schématique montrant la distribution de fils de trame dans différentes sections de la structure fibreuse des figures 2 et 3 ;
- la figure 5 est une vue correspondant à la figure 4 dans laquelle les fils de trame sont liés par des fils de chaîne selon un premier mode de réalisation de tissage ;
- la figure 6 représente, à plat, un deuxième mode de réalisation du tissage des fils de trame ayant la distribution de la figure 4 par des fils de chaîne ;
- les figures 7A à 7D montrent plus en détails les motifs de tissage de la figure 6 ;
- la figure 8 représente, à plat, un troisième mode de réalisation du tissage des fils de trame ayant la distribution de la figure 4 par des fils de chaîne ; et
- les figures 9A à 9D montrent plus en détails les motifs de tissage de la figure 8.

### Description détaillée de l'invention

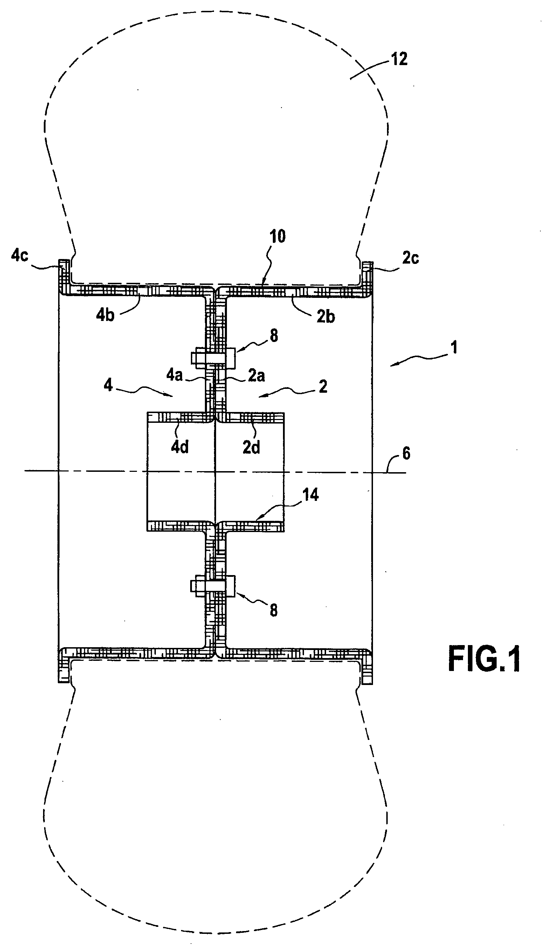

Le domaine d'application de l'invention est celui de la réalisation de structures fibreuses aptes à constituer des renforts fibreux, ou préformes, pour la fabrication de pièces axisymétriques en matériau composite à diamètre évolutif (c'est-à-dire ayant au moins deux diamètres différents), comme les carters de compresseur pour moteur d'hélicoptère à turbine à gaz ou les roues d'aéronef telles que celle illustrée par la figure 1.

La roue 1 d'aéronef représentée sur cette figure se compose notamment de deux demi-roues 2, 4 chacune de forme axisymétrique et ayant une forme d'anneau ouvert à section en forme de C. Ces demi-roues 2, 4 sont centrées sur un même axe de rotation 6 et fixées l'une sur l'autre au niveau de leur fond 2a, 4a respectif, par exemple par l'intermédiaire de fixation 8 de type vis/écrou.

Chaque demi-roue 2, 4 possède un grand diamètre 2b, 4b dont la surface extérieure définit la jante 10 de la roue. Au niveau de leur extrémité libre, ces grands diamètres comprennent chacun un rebord 2c, 4c faisant saillie vers l'extérieur, ces deux rebords permettant d'assurer une retenue axiale d'un pneumatique 12 sur la jante 10.

Chaque demi-roue 2, 4 présente également un petit diamètre 2d, 4d concentrique au grand diamètre 2b, 4b, ces petits diamètres formant l'interface avec l'essieu 14 de la roue.

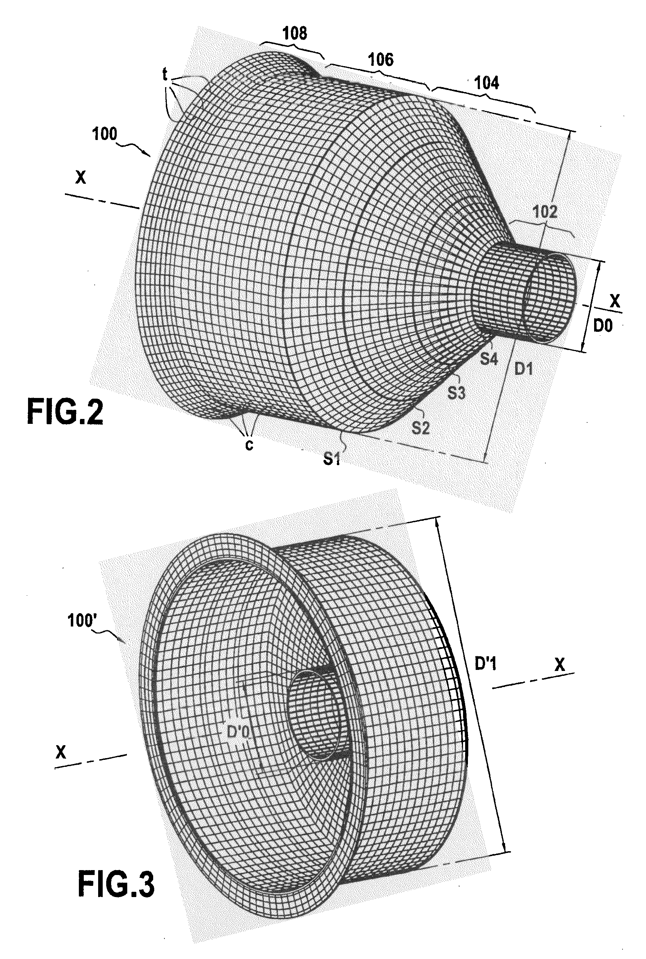

Chaque demi-roue est fabriquée à partir d'un renfort fibreux, ou préforme, densifié par une matrice. Le renfort fibreux des demi-roues est quant à lui obtenu à partir d'une structure fibreuse telle que celle illustrée sur la figure 2 qui est ensuite soumise à des déformations géométriques pour l'amener à une forme de demi-roue comme celle représentée sur la figure 3.

La structure fibreuse 100 représentée sur la figure 2 présente une forme axisymétrique centrée sur un axe X-X. De droite à gauche sur la figure 2, elle comprend notamment une première partie cylindrique 102 avec un diamètre D0, une partie tronconique 104 ayant un petit diamètre D0 et un grand diamètre D1, et une seconde partie cylindrique 106 avec un diamètre D1. Au niveau de son extrémité opposée à la première partie cylindrique 102, la structure fibreuse se termine par une autre partie tronconique 108 ayant comme grand diamètre un diamètre légèrement supérieur à D1. On notera que le rapport D1/D0 est égal à 2.

Différentes déformations géométriques sont ensuite appliquées à la structure fibreuse pour l'amener au renfort fibreux 100' de demi-roue d'aéronef représenté sur la figure 3. Ces déformations géométriques sont notamment détaillées dans la demande de brevet français n°1258720 déposée le 18 septembre 2012. Notamment, pour lui conférer la forme représentée à la figure 3, la structure fibreuse 100 de la figure 2 est ouverte radialement de sorte que ses diamètres D0 et D1 deviennent des diamètres D'0 et D'1, respectivement, et elle est retournée sur elle-même pour obtenir une forme géométrique correspondant à celle du renfort fibreux 100'.

Après ces déformations géométriques, on constate que la première partie cylindrique de diamètre D'0 de la structure fibreuse est destinée à constituer le moyeu de la demi-roue à fabriquer, la partie tronconique est destinée à constituer le fond de la demi-roue, la seconde partie cylindrique de diamètre D'1 est destinée à constituer la jante de la demi-roue et l'autre partie tronconique à l'extrémité de la structure fibreuse est destinée à constituer le rebord de la demi-roue pour le maintien du pneumatique.

Après une éventuelle phase de découpe et/ou de compactage, le renfort fibreux 100' de demi-roue d'aéronef représenté sur la figure 3 est ensuite soumis à une étape de densification par une matrice. Par exemple, pour des applications à température principalement inférieures à 450°C, on utilisera de préférence des fibres de carbone ou des fibres de verre (ou une combinaison de ces fibres), et une résine organique telle qu'une résine époxy, polybismaléimide (BMI), cyanate-ester, benzoxazine, phénolique, polyimide, voire vinylester (ou toute modification de ces résines. La densification pourra être réalisée par exemple par moulage avec transfert de résine (procédé RTM pour « Resin Transfer Moulding »).

On décrira maintenant comment est obtenue la structure fibreuse 100 conformément à l'invention.

La structure fibreuse 100 est typiquement obtenue par « contour weaving ». Le « contour weaving » est une technique connue de tissage d'une texture fibreuse de forme axisymétrique dans laquelle la structure fibreuse est tissée sur un mandrin avec appel de fils de chaîne, le mandrin présentant un profil extérieur défini en fonction du profil de la texture fibreuse à réaliser.

Dans l'application au tissage de la structure fibreuse 100 de la figure 2, le mandrin (non représenté) présente un profil extérieur qui épouse le profil de la structure fibreuse, c'est-à-dire qu'il possède une première partie cylindrique avec un diamètre D0, une partie tronconique ayant un petit diamètre D0 et un grand diamètre D1, une seconde partie cylindrique avec un diamètre D1, et une partie tronconique d'extrémité avec comme grand diamètre un diamètre légèrement supérieur à D1. On notera que le rapport D1/D0 entre grand diamètre D1 et petit diamètre D0 de la partie tronconique du mandrin est égal ou supérieur à 2.

Avec une telle technique de tissage, un tissu formé d'une couche de fils de chaîne entrelacés avec des fils de trame est réalisé par un métier à tisser puis enroulé en plusieurs couches sur le mandrin. Les fils de chaîne du tissu s'étendent sur le mandrin selon des directions circonférentielles et doivent donc présenter des longueurs différentes en fonction de leur emplacement sur le mandrin. Quant aux fils de trame, ils sont insérés sur le tissu selon une direction axiale avec des angles contrôlés.

Chaque couche de la structure fibreuse 100 ainsi obtenue présente une architecture de fils de chaîne c s'étendant selon des directions circonférentielles et s'entrelaçant avec des fils de trame t, ces derniers s'étendant selon des directions axiales. Plusieurs couches du tissu peuvent être nécessaires pour obtenir une structure fibreuse d'épaisseur souhaitée.

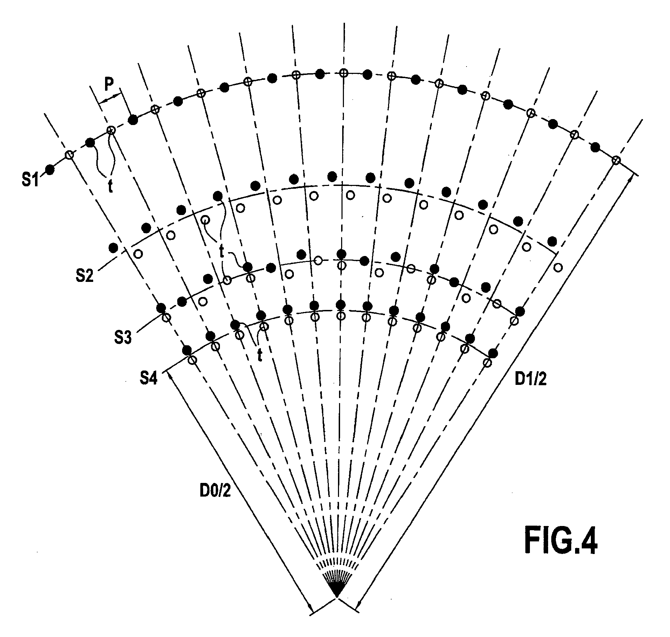

Pour chaque couche de fils de chaîne et de trame de la structure fibreuse, la figure 4 montre la distribution angulaire des fils de trame t sur un secteur angulaire selon leur emplacement le long de la partie tronconique de la structure fibreuse (c'est-à-dire entre les petit et grand diamètres de celle-ci). Sur cette figure, les fils de trame t sont représentés en section par des ronds selon 4 sections différentes S1 à S4. L'emplacement de ces sections S1 à S4 le long de la structure fibreuse est illustré sur la figure 2.

Dans cet exemple de distribution des fils de trame, le rapport D1/D0 entre grand diamètre D1 et petit diamètre D0 de la partie tronconique de la structure fibreuse a été choisi égal à 2.

Comme représenté sur cette figure, dans la zone du grand diamètre D1 de la structure fibreuse (section S1), les fils de trame t de chaque couche de fils sont espacés (dans la direction circonférentielle) d'un pas P constant qui est choisi notamment pour obtenir le taux de fibres recherché pour le renfort fibreux. Ces fils de trame sont notamment répartis angulairement sur un même diamètre de la structure fibreuse de sorte à former une seule et même épaisseur (les fils de trame sont disposés les uns à côté des autres sur le même diamètre).

Au fur et à mesure que l'on se rapproche du petit diamètre D0 de la structure fibreuse (sections S2 et S3), ces mêmes fils de trame t vont avoir tendance à se rapprocher les uns des autres jusqu'à être répartis angulairement selon deux diamètres différents dans la zone de ce petit diamètre D0 (section S4) de sorte à y former deux strates (ou épaisseurs) qui se superposent l'une à l'autre.

Différents modes de réalisation sont prévus pour lier entre eux les fils de trame par des fils de chaîne de chaque couche de fils formant la structure fibreuse.

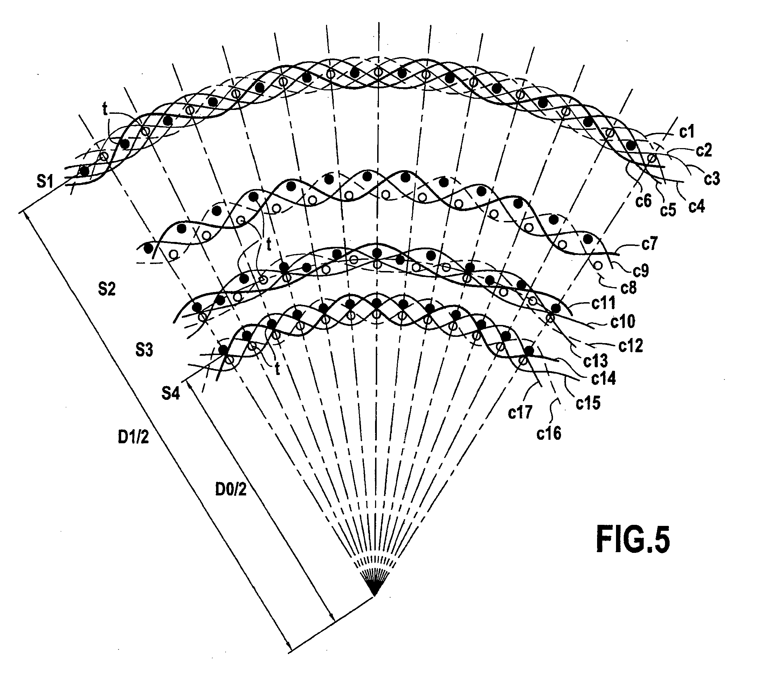

Dans le premier mode de réalisation représenté par la figure 5, les fils de trame de chaque couche de fils sont tissés avec des fils de chaîne pour ne former qu'une seule et même épaisseur de fils.

Au niveau de la section S1 (grand diamètre D1 de la structure fibreuse) les fils de trame t sont ainsi liés entre eux par une seule et même couche de fils de chaîne c1 à c6. Le tissu obtenu est donc à une couche de fils de trame et une couche de fils de chaîne.

Plus précisément, dans cet exemple de réalisation de la figure 5, les fils de chaîne c1 à c6 liant les fils de trame t de cette couche au niveau de la section S1 sont tissés selon une armure sergé 3 sur 3 (6 plans d'armure successifs sont nécessaires pour décrire ce motif de tissage dans son ensemble).

Au niveau de la section S4 correspondant au petit diamètre D0 de la structure fibreuse, les fils de trame t répartis en deux strates superposées sont liés entre eux par une seule et même couche de fils de chaîne c14 à c17 selon une armure de type interlock (c'est-à-dire que dans une section droite normale à l'axe de symétrie de la structure fibreuse, un seul fil de chaîne est visible). Sur la figure 5, sont représentés projetés sur la même vue 4 plans d'armure successifs pour décrire ce motif de tissage dans son ensemble, ces plans représentant 4 colonnes de fils de chaîne du tissage distinctes et adjacentes. Le tissu obtenu au niveau de cette section S4 est donc à une seule couche de fils de chaîne et deux couches de fils de trame liés par une armure de type interlock.

Au niveau de la section S3 de la structure fibreuse, le tissu obtenu est toujours à une seule couche de fils de chaîne c10 à c13 avec des fils de trame t redistribués alternativement en une à deux strates. Il est ici nécessaire de disposer de 4 plans d'armure différents pour décrire ce motif de tissage interlock dans son ensemble.

Enfin, au niveau de la section S2 de la structure fibreuse, la distribution des fils de trame s'étalant davantage par rapport à la section S3, le motif de tissage des fils de chaîne c7 à c9 est modifié pour permettre une répartition harmonieuse des fils de trame t sur toute la surface. Dans ce cas, 3 plans d'armure différents sont nécessaires pour décrire le motif de tissage interlock dans son ensemble.

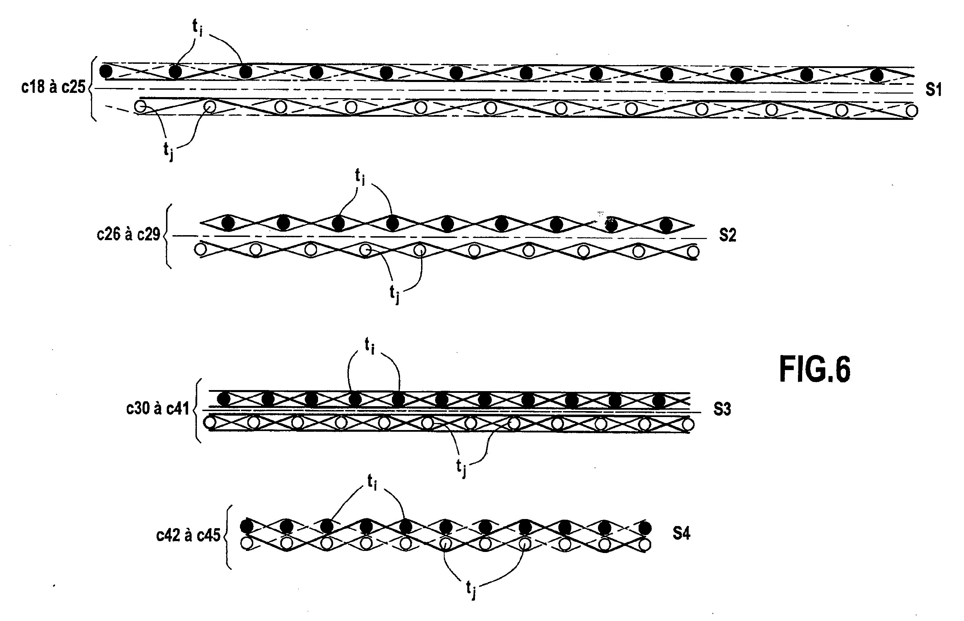

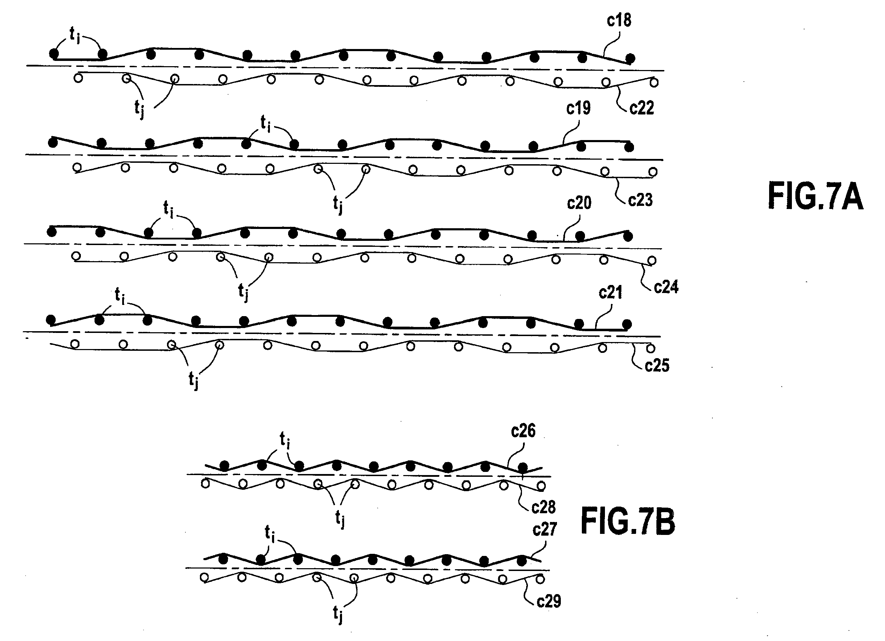

Les figures 6 et 7A à 7D représentent un deuxième mode de réalisation pour lier entre eux les fils de chaîne et de trame de chaque couche de fils formant la structure fibreuse conformément à l'invention.

Dans ce deuxième mode de réalisation, les fils de trame de chaque couche de fils sont tissés pour former deux couches dissociées de tissu, à l'exception de la section S4 correspondant au petit diamètre D0 de la structure fibreuse pour laquelle les fils de trame sont liés pour ne former qu'une seule et même couche de fils.

Au niveau de la section S1 de la structure fibreuse (correspondant au grand diamètre de celle-ci), les fils de trame, toujours disposés sur une même épaisseur, sont ainsi répartis en deux sous-ensembles distincts de fils de trame, à savoir tᵢ et tⱼ, qui sont liées par deux couches de fils de chaîne, respectivement c18 à c21 et c22 à c25. On obtient ainsi un tissu à deux couches de fils de trame indépendantes.

Dans l'exemple de réalisation des figures 6 et 7A, les fils de chaîne liant les fils de trame tᵢ, tⱼ de chaque couche sont tissés selon une armure de type sergé 2 sur 2. Pour chacune de ces couches de fils de trame, 4 plans d'armure différents sont nécessaires pour décrire un tel motif de tissage dans son ensemble. Ces plans d'armure successifs sont représentés sur la figure 7A.

Au niveau de la section S2 de la structure fibreuse, les fils de trame sont également répartis selon deux sous-ensembles distincts de fils de trame tᵢ et tⱼ qui sont liés par deux couches de fils de chaîne, respectivement c26, c27 et c28, c29. On obtient ainsi un tissu à deux couches de fils de trame indépendantes.

Par rapport à l'armure de tissage de la section S1, les fils de chaîne sont ici tissés selon une armure de type toile (1 sur 1). Pour chacune des couches de fils de trame, 2 plans d'armure différents sont nécessaires pour décrire le motif de tissage dans son ensemble comme représenté sur la figure 7B.

Au niveau de la section suivante S3 de la structure fibreuse, les fils de trame se resserrent davantage. Ces fils de trame sont toujours répartis selon deux sous-ensembles distincts de fils de trame tᵢ et tⱼ qui sont liés par deux couches de fils de chaîne, respectivement c30 à c35 et c36 à c41. On obtient encore un tissu à deux couches de fils de trame indépendantes.

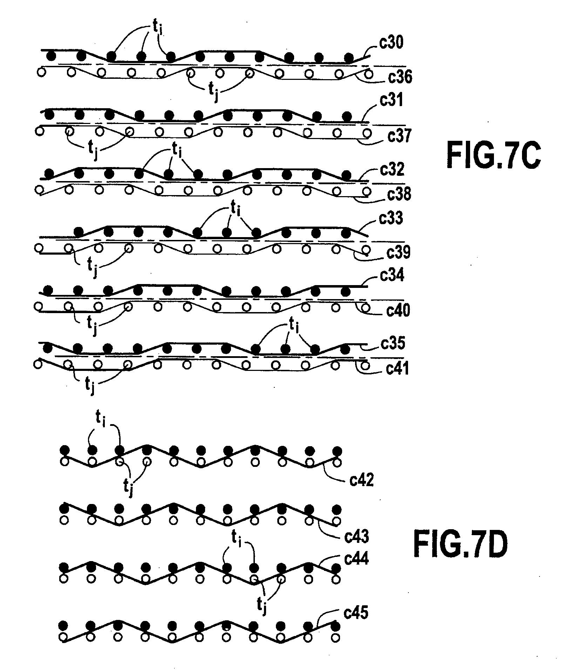

Par rapport aux armures de tissage précédemment décrites pour les sections S1 et S2, les fils de chaîne sont ici tissés selon une armure sergé 3 sur 3. Pour chaque couche de fils de trame, 6 plans d'armure différents sont nécessaires pour décrire un tel motif de tissage dans son ensemble comme représenté sur la figure 7C.

Enfin, au niveau de la section S4 correspondant au petit diamètre de la structure fibreuse, les fils de trame tᵢ et tⱼ répartis en deux strates de fils superposées sont liés par une seule couche de fils de chaîne c42 à c45.

Les fils de chaîne c42 à c45 sont ici tissés selon une armure de type interlock pour laquelle 4 plans d'armure différents sont nécessaires pour décrire le motif de tissage en entier (voir figure 7D). Le tissu obtenu est donc à une seule couche de fils de chaîne et deux couches de fils de trame liés par une armure de type interlock.

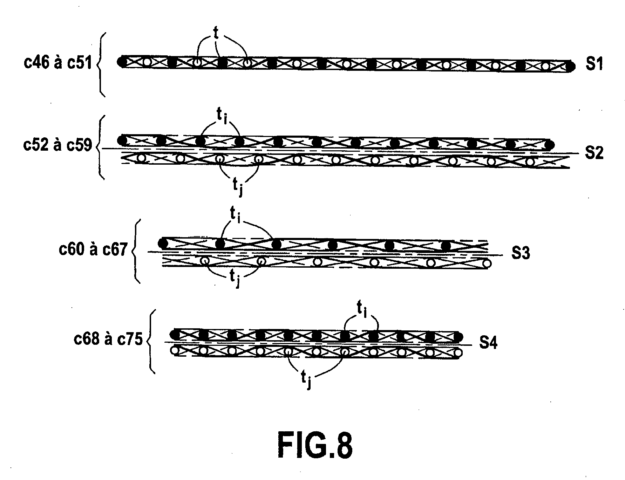

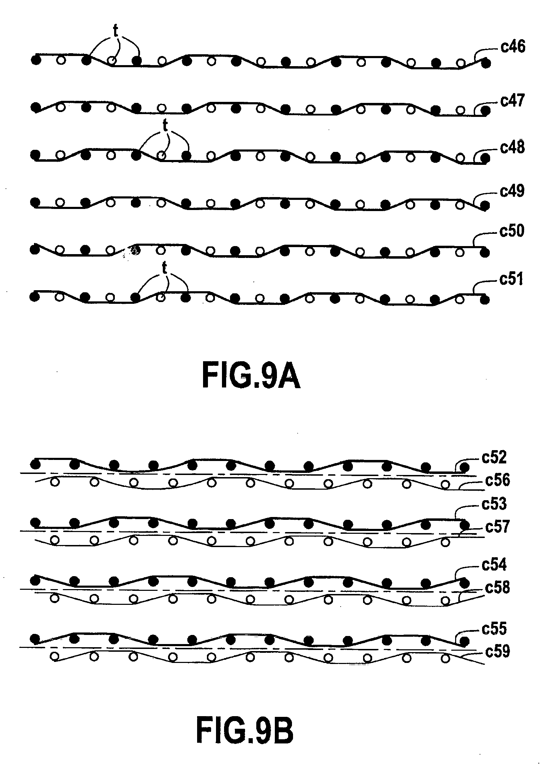

Les figures 8 et 9A à 9D représentent un troisième mode de réalisation pour lier entre eux les fils de chaîne et de trame de chaque couche de fils formant la structure fibreuse conformément à l'invention.

Dans ce troisième mode de réalisation, les fils de trame de chaque couche de tissu sont tissés avec des fils de chaîne pour former deux sous-ensembles dissociés, à l'exception de la section S1 correspondant au grand diamètre D1 de la structure fibreuse pour laquelle les fils de trame sont liés avec des fils de chaîne pour ne former qu'une seule et même couche.

Au niveau de la section S1 de la structure fibreuse (correspondant à son grand diamètre) les fils de trame t sont ainsi liés entre eux par une seule et même couche de fils de chaîne c46 à c51. Le tissu obtenu est donc à une couche de fils de trame et une couche de fils de chaîne.

Plus précisément, dans l'exemple représenté, les fils de chaîne c₄₆ à c₅₁ sont tissés ici selon une armure sergé 3 sur 3 (6 plans d'armure successifs sont représentés sur la figure 9A pour décrire ce motif de tissage dans son ensemble). Cet exemple de tissage correspond également à celui décrit en liaison avec la section S1 de la figure 5.

Au niveau de la section S2 de la structure fibreuse, les fils de trame sont en revanche répartis selon deux sous-ensembles distincts de fils de trame tᵢ et tⱼ qui sont liées par deux couches de fils de chaîne indépendantes entre elles, respectivement c52 à c55 et c56 à c59. On obtient ainsi un tissu à deux couches de fils de trame et chaîne indépendantes. L'armure de tissage choisie est ici du sergé 2 sur 2 (4 plans d'armure différents sont nécessaires pour décrire ce motif de tissage dans son ensemble - voir figure 9B).

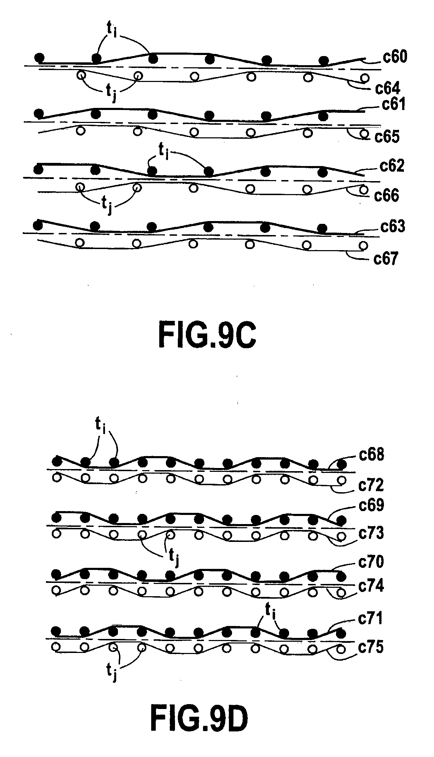

Au niveau de la section S3, les fils de trame sont plus rapprochés mais également répartis selon deux sous-ensembles distincts de fils de trame tᵢ et tⱼ qui sont liées par deux couches de fils de chaîne indépendantes entre elles, respectivement c60 à c63 et c64 à c67. On obtient un tissu à deux couches de fils de trame et chaîne indépendantes. L'armure de tissage choisie est encore du sergé 2 sur 2 (voir figure 9C).

Enfin, au niveau de la section S4 correspondant au petit diamètre de la structure fibreuse, les fils de trame tᵢ et tⱼ répartis en deux épaisseurs de fils superposés sont liés indépendamment par deux couches de fils de chaîne, respectivement c68 à c71 et c72 à c75. On obtient un tissu à deux couches de fils de trame et chaîne indépendantes. L'armure de tissage choisie est également du sergé 2 sur 2 (voir figure 9D).

Bien entendu, d'autres modes de réalisation pour lier entre eux les fils de trame de chaque couche de fils formant la structure fibreuse conformément à l'invention peuvent être envisagés.

En particulier, les fils de trame de chaque couche de fils peuvent être tissés indifféremment pour former une seule ou plusieurs couches indépendantes en fonction des besoins. Notamment, dans le cas où la structure fibreuse est destinée à être déformée géométriquement pour former un renfort fibreux de demi-roue d'aéronef, il conviendra, pour des raisons évidentes de manipulation de la structure fibreuse, de former deux couches de fils de trame indépendantes au niveau de la section S4 correspondant au petit diamètre de la structure fibreuse.

Par ailleurs, les armures de tissage choisies pour chaque couche de fils de trame peuvent varier entre les différentes sections de la structure fibreuse et ne sont pas limités aux seuls exemples décrits ici. D'autres motifs de tissage tels qu'une armure de satin peuvent être envisagés. On pourra notamment se référer au document WO 2006/136755 qui en donne différentes illustrations.

Pour les sections de la structure fibreuse comprises entre le grand diamètre et le petit diamètre, on privilégiera toutefois une armure de tissage pour laquelle l'entrelacement des fils de chaîne et de trame dans l'épaisseur des couches de fils permettent l'équilibrage de longueur des fils sur un motif complet de tissage, afin de permettre des glissements relatifs équivalents lors des déformations géométriques entre l'état de structure fibreuse (figure 2) et l'état de renfort fibreux (figure 3). Ainsi, il est souvent préférable d'utiliser des armures de type sergé N sur N ou de type toile, plutôt que des armures de type satin ou de type sergé N sur M.

Pour les sections coniques et les raccordements aux surfaces cylindriques, on privilégiera des motifs de tissage à embuvage équilibré au moins pour les fils de trame. Pour les sections cylindriques de petit diamètre, on privilégiera des motifs de tissage à embuvage équilibré au moins pour les fils de chaîne.

De plus, il est possible d'utiliser dans le tissage de la structure fibreuse selon l'invention des fils de différents titres en différents endroits de la structure. Ainsi, les fils de trame pourront être de même titre ou de titres différents, par exemple entre ceux disposés du côté de la face interne et ceux disposés du côté de la face externe de la couche de tissu correspondante. De même, les fils de chaîne pourront être de même titre ou de titres différents, par exemple au sein d'une même armure de type interlock ou en fonction de deux couches indépendantes de fils de chaîne.

Enfin, lorsque le rapport D1/D0 entre grand diamètre D1 et petit diamètre D0 de la partie tronconique de la structure fibreuse est choisi pour être supérieur à 2, la distribution angulaire des fils de trame sur toutes les sections de la partie tronconique de la structure fibreuse sera différente de celle illustrée par la figure 4. Typiquement, si le rapport D1/D0 est égal à 2,5, les fils de trame d'une même couche de fils qui sont distribués sur la section S4 correspondant au petit diamètre de la structure fibreuse seront répartis angulairement selon trois diamètres différents pour former 2,5 strates superposées. De même, si ce rapport D1/D0 est égal à 3, les fils de trame au niveau de cette section S4 seront répartis en 3 strates superposées, etc. La façon dont ces couches de trame sont liées par des fils de chaîne reste identique aux différents modes de réalisation décrits précédemment.

## Revendications

1. Structure fibreuse (100) tissée en une seule pièce pour la fabrication d'une pièce axisymétrique en matériau composite à diamètre évolutif, la structure fibreuse ayant une partie de forme tronconique (104) avec un grand diamètre (D1) et un petit diamètre (D0), le rapport entre grand diamètre et petit diamètre étant égal au moins à 2, la structure fibreuse étant formée par enroulement de couches de fils de chaîne et de trame qui sont tissées sur un mandrin ayant un profil défini en fonction du profil de la pièce à fabriquer avec appel en fils de chaîne, **caractérisé en ce que**, pour chaque couche de fils de chaîne et de trame, les fils de trame (t) sont répartis angulairement selon un même diamètre dans une zone du grand diamètre de la partie de forme tronconique de la structure fibreuse et selon au moins deux diamètres différents dans une zone du petit diamètre de la partie de forme tronconique de la structure fibreuse pour former au moins deux strates superposées de fils de trame.

2. Structure fibreuse selon la revendication 1, dans laquelle, pour chaque couche de fils, les deux strates de fils de trame (t) répartis dans la zone du petit diamètre de la partie de forme tronconique sont liées entre elles par une seule et même couche de fils de chaîne (c).

3. Structure fibreuse selon la revendication 2, dans laquelle les fils de chaîne liant entre elles deux strates de fils de trame répartis dans la zone du petit diamètre de la partie de forme tronconique sont tissés selon une armure de type interlock.

4. Structure fibreuse selon la revendication 1, dans laquelle, pour chaque couche de fils, chacune des strates de fils de trame répartis dans la zone du petit diamètre de la partie de forme tronconique est liée par une seule et même couche de fils de chaîne.

5. Structure fibreuse selon la revendication 4, dans laquelle les fils de chaîne liant chaque strate de fils de trame répartis dans la zone du petit diamètre de la partie de forme tronconique sont tissés selon une armure de type toile, sergé ou satin.

6. Structure fibreuse selon l'une quelconque des revendications 1 à 5, dans laquelle, pour chaque couche de fils, les fils de trame répartis dans la zone du grand diamètre de la partie de forme tronconique sont liés entre eux par une seule et même couche de fils de chaîne.

7. Structure fibreuse selon la revendication 6, dans laquelle les fils de chaîne liant les fils de trame répartis dans la zone du grand diamètre de la partie de forme tronconique sont tissés selon une armure de type toile, sergé ou satin.

8. Structure fibreuse selon l'une quelconque des revendications 1 à 5, dans laquelle, pour chaque couche de fils, les fils de trame répartis dans la zone du grand diamètre de la partie de forme tronconique sont liés entre eux par deux couches indépendantes de fils de chaîne.

9. Structure fibreuse selon la revendication 8, dans laquelle les fils de chaîne liant les fils de trame répartis dans la zone du grand diamètre de la partie de forme tronconique sont tissés selon une armure de type toile, sergé ou satin.

10. Structure fibreuse selon l'une quelconque des revendications 1 à 9, dans laquelle, pour chaque couche de fils, les fils de trame répartis entre le grand diamètre et le petit diamètre de la partie de forme tronconique de la structure fibreuse sont liés entre eux par une seule ou plusieurs couches de fil de chaîne.

11. Structure fibreuse selon la revendication 10, dans laquelle les fils de chaîne d'une même couche de fils de chaîne liant des fils de trame entre le grand diamètre et le petit diamètre de la partie de forme tronconique sont tissés selon une armure de type toile ou sergé.

12. Pièce en matériau composite ayant un renfort fibreux (100') densifié par une matrice, dans laquelle le renfort fibreux est formé par une structure fibreuse (100) selon l'une quelconque des revendications 1 à 11.

13. Pièce selon la revendication 12, constituant une demi-roue (2, 4) d'aéronef.

14. Procédé de tissage en une seule pièce d'une structure fibreuse selon l'une quelconque des revendications 1 à 11, comprenant l'enroulement de plusieurs couches de fils de chaîne et de trame sur un mandrin ayant un profil défini en fonction du profil de la pièce à fabriquer avec appel en fils de chaîne.

## Patentansprüche

1. Einstückig gewebte Faserstruktur (100) für die Herstellung eines axialsymmetrischen Verbundwerkstoffteils mit sich progressiv änderndem Durchmesser, wobei die Faserstruktur einen kegelstumpfförmigen Teil (104) mit einem großen Durchmesser (D1) und einem kleinen Durchmesser (D0) hat, wobei das Verhältnis zwischen großem Durchmesser und kleinem Durchmesser wenigstens gleich 2 ist, wobei die Faserstruktur durch Aufwickeln von Lagen aus Kett- und Schussfäden gebildet ist, die auf einem Dorn mit einem in Abhängigkeit von dem Profil des herzustellenden Teils definierten Profil mit Kettfadenbereitstellung gewebt sind, **dadurch gekennzeichnet, dass** für jede Lage aus Kett- und Schussfäden die Schussfäden (t) in einem Bereich des großen Durchmessers des kegelstumpfförmigen Teils der Faserstruktur entlang eines gleichen Durchmessers und in einem Bereich des kleinen Durchmessers des kegelstumpfförmigen Teils der Faserstruktur entlang von wenigstens zwei unterschiedlichen Durchmessern winkelmäßig verteilt sind, um wenigstens zwei übereinander angeordnete Schussfadenschichten zu bilden.

2. Faserstruktur nach Anspruch 1, bei der für jede Fadenlage die beiden Schichten aus Schussfäden (t), welche in dem Bereich des kleinen Durchmessers des kegelstumpfförmigen Teils verteilt sind, durch ein und dieselbe Lage aus Kettfäden (c) untereinander verbunden sind.

3. Faserstruktur nach Anspruch 2, bei der die Kettfäden, die zwei Schichten aus Schussfäden, welche in dem Bereich des kleinen Durchmessers des kegelstumpfförmigen Teils verteilt sind, untereinander verbinden, entsprechend einer Bindung vom Typ Interlock gewebt sind.

4. Faserstruktur nach Anspruch 1, bei der für jede Fadenlage eine jede der Schichten aus Schussfäden, welche in dem Bereich des kleinen Durchmessers des kegelstumpfförmigen Teils verteilt sind, durch ein und dieselbe Lage aus Kettfäden verbunden ist.

5. Faserstruktur nach Anspruch 4, bei der die Kettfäden, die jede Schicht aus Schussfäden, welche in dem Bereich des kleinen Durchmessers des kegelstumpfförmigen Teils verteilt sind, verbinden, entsprechend einer Bindung vom Typ Leinwand, Serge oder Satin gewebt sind.

6. Faserstruktur nach einem der Ansprüche 1 bis 5, bei der für jede Fadenlage die Schussfäden, welche in dem Bereich des großen Durchmessers des kegelstumpfförmigen Teils verteilt sind, durch ein und dieselbe Kettfadenlage untereinander verbunden sind.

7. Faserstruktur nach Anspruch 6, bei der die Kettfäden, welche die Schussfäden, die in dem Bereich des großen Durchmessers des kegelstumpfförmigen Teils verteilt sind, verbinden, entsprechend einer Bindung vom Typ Leinwand, Serge oder Satin gewebt sind.

8. Faserstruktur nach einem der Ansprüche 1 bis 5, bei der für jede Fadenlage die Schussfäden, welche in dem Bereich des großen Durchmessers des kegelstumpfförmigen Teils verteilt sind, durch zwei unabhängige Kettfadenlagen untereinander verbunden sind.

9. Faserstruktur nach Anspruch 8, bei der die Kettfäden, welche die Schussfäden, die in dem Bereich des großen Durchmessers des kegelstumpfförmigen Teils verteilt sind, verbinden, entsprechend einer Bindung vom Typ Leinwand, Serge oder Satin gewebt sind.

10. Faserstruktur nach einem der Ansprüche 1 bis 9, bei der für jede Fadenlage die Schussfäden, welche zwischen dem großen Durchmesser und dem kleinen Durchmesser des kegelstumpfförmigen Teils der Faserstruktur verteilt sind, durch eine einzige oder mehrere Kettfadenlagen untereinander verbunden sind.

11. Faserstruktur nach Anspruch 10, bei der die Kettfäden einer gleichen Kettfadenlage, die Schussfäden zwischen dem großen Durchmesser und dem kleinen Durchmesser des kegelstumpfförmigen Teils verbindet, entsprechend einer Bindung vom Typ Leinwand oder Serge gewebt sind.

12. Verbundwerkstoffteil mit einer durch eine Matrix verdichteten Faserverstärkung (100'), bei dem die Faserverstärkung durch eine Faserstruktur (100) nach einem der Ansprüche 1 bis 11 gebildet ist.

13. Teil nach Anspruch 12, das eine Radhälfte (2, 4) eines Luftfahrzeugs bildet.

14. Verfahren zum einstückigen Weben einer Faserstruktur nach einem der Ansprüche 1 bis 11, umfassend das Aufwickeln von mehreren Lagen aus Kett- und Schussfäden auf einen Dorn mit einem in Abhängigkeit von dem Profil des herzustellenden Teils definierten Profil mit Kettfadenbereitstellung.

## Claims

1. A single-piece woven fiber structure (100) for fabricating an axisymmetric part of varying diameter made out of composite material, the fiber structure having a portion of frustoconical shape (104) with a large diameter (D1) and a small diameter (D0), the ratio between the large diameter and the small diameter being not less than 2, the fiber structure being formed by winding layers of warp and weft yarns that are woven on a mandrel having a profile that is defined as a function of the profile of the part to be fabricated with warp yarn take-up, the structure being **characterized in that** for each layer of warp and weft yarns, the weft yarns (t) are distributed angularly on a single diameter in a zone of the large diameter of the portion of frustoconical shape of the fiber structure and on at least two different diameters in a zone of the small diameter of the portion of frustoconical shape of the fiber structure in order to form at least two superposed plies of weft yarns.

2. A fiber structure according to claim 1, wherein for each layer of yarns, the two plies of weft yarns (t) distributed in the zone of the small diameter of the portion of frustoconical shape are interlinked by a single layer of warp yarns (c).

3. A fiber structure according to claim 2, wherein the warp yarns interlinking two plies of weft yarns distributed in the zone of the small diameter of the portion of frustoconical shape are woven using an interlock type weave.

4. A fiber structure according to claim 1, wherein, for each layer of yarns, each of the plies of weft yarns distributed in the zone of the small diameter of the portion of frustoconical shape is interlinked by a single layer of warp yarns.

5. A fiber structure according to claim 4, wherein the warp yarns interlinking each ply of weft yarns distributed in the zone of the small diameter of the portion of frustoconical shape are woven using a weave of plain, serge, or satin type.

6. A fiber structure according to any one of claims 1 to 5, wherein, in each layer of yarns, the weft yarns distributed in the zone of the large diameter of the portion of frustoconical shape are interlinked by a single layer of warp yarns.

7. A fiber structure according to claim 6, wherein the warp yarns interlinking the weft yarns distributed in the zone of the large diameter of the portion of frustoconical shape are woven using a weave of plain, serge, or satin type.

8. A fiber structure according to any one of claims 1 to 5, wherein, for each layer of yarns, the weft yarns distributed in the zone of the large diameter of the portion of frustoconical shape are interlinked by two independent layers of warp yarns.

9. A fiber structure according to claim 8, wherein the warp yarns interlinking the weft yarns distributed in the zone of the large diameter of the portion of frustoconical shape are woven using a weave of plain, serge, or satin type.

10. A fiber structure according to any one of claims 1 to 9, wherein, for each layer of yarns, the weft yarns distributed between the large diameter and the small diameter of the portion of frustoconical shape of the fiber structure are interlinked by one or more layers of warp yarns.

11. A fiber structure according to claim 10, wherein the warp yarns in a given layer of warp yarns interlinking weft yarns between the large diameter and the small diameter of the portion of frustoconical shape are woven using a weave of plain or serge type.

12. A part made of composite material having fiber reinforcement (100') densified by a matrix, wherein the fiber reinforcement is formed by a fiber structure (100) according to any one of claims 1 to 11.

13. A part according to claim 12, constituting an aircraft wheel-half (2, 4).

14. A method of weaving as a single piece a fiber structure according to any one of claims 1 to 11, the method comprising winding a plurality of layers of warp and weft yarns on a mandrel having a profile that is defined as a function of the profile of the part to be fabricated with warp yarn take-up.
